# EUROPÄISCHE PATENTANMELDUNG

(11) **EP 1 426 548 A2**
(43) Veröffentlichungstag der Anmeldung: **09.06.2004**
(21) Anmeldenummer: 03025106.0
(22) Anmeldetag: 31.10.2003
(51) Int. Cl.: E06B 9/40, B60J 1/20

(54) **Rollosystem, insbesondere für ein Kraftfahrzeug**

(30) Priorität: 04.12.2002 DE 10256599
(71) Anmelder: ArvinMeritor GmbH, 63128 Dietzenbach (DE)
(72) Erfinder: Böhm, Horst, 60599 Frankfurt (DE); Grimm, Rainer, 60599 Frankfurt (DE); Becher, Thomas, 63110 Rodgau (DE); Bachmann, Hubert, 67125 Dannstadt (DE)
(74) Vertreter: Sties, Jochen, Dipl.-Ing.

(57) **Zusammenfassung**

Ein Rollosystem (10), insbesondere für ein Kraftfahrzeug, mit einem Wickelkörper (12), der drehbar ist, und einem Rollo (14), das mit einem Ende am Wickelkörper (12) angebracht ist, ist dadurch gekennzeichnet, daß ein zu dem Ende entgegengesetzter Bereich des Rollos ortsfest angebracht ist und der Wickelkörper (12) translatorisch verstellbar ist.

## Beschreibung

Die Erfindung betrifft ein Rollosystem, insbesondere für ein Kraftfahrzeug, mit einem Wickelkörper, der drehbar ist, und einem Rollo, das mit einem Ende am Wickelkörper angebracht ist.

Ein solches Rollosystem ist in verschiedenen Ausgestaltungen bekannt. Aus der deutschen Offenlegungsschrift 197 39 919 ist beispielsweise ein Rollosystem bekannt, bei dem der Wickelkörper am Rand einer Öffnung eines Fahrzeugdachs angebracht ist. Das Rollo kann vom Wickelkörper abgezogen werden, so daß es sich über den Bereich der Öffnung erstreckt und hier einen Sonnenschutz bildet. Das Rollo ist dabei seitlich von zwei Führungsschienen geführt, in welche die Längsränder des Rollos eingeschoben werden, wenn dieses vom Wickelkörper abgezogen wird. Der Nachteil besteht darin, daß die Betätigungskräfte des Rollos überproportional ansteigen, wenn es vom Wickelkörper abgezogen wird. Zum einen steigt nämlich eine Rückzugskraft an, die von einer Rückzugsfeder auf den Wickelkörper ausgeübt wird. Zu dieser Rückzugskraft addiert sich eine Reibungskraft, die von der Reibung zwischen den Rändern des Rollos und den Führungsschienen resultiert und die mit steigender Auszugslänge des Rollos ansteigt.

Die Aufgabe der Erfindung besteht darin, ein Rollo der eingangs genannten Art dahingehend weiterzubilden, daß der Anstieg der Betätigungskräfte bei steigendem Rolloauszug verringert wird.

Zur Lösung dieser Aufgabe ist erfindungsgemäß bei einem Rollosystem der eingangs genannten Art vorgesehen, daß ein zu dem Ende entgegengesetzter Bereich des Rollos ortsfest angebracht ist und der Wickelkörper translatorisch verstellbar ist. Dieses Rollosystem beruht auf dem Grundgedanken, daß die im Stand der Technik auftretende Reibung zwischen den Führungsschienen und dem Rollo dadurch vermieden werden kann, daß nicht das Rollo vom Wickelkörper abgezogen wird und damit ein immer längerer Bereich des Rollos verstellt werden muß, sondern der Wickelkörper translatorisch so bewegt wird, daß das Rollo feststehend ist und über dem Bereich, den es abdecken soll, abgewickelt wird.

Gemäß der bevorzugten Ausführungsform der Erfindung sind zwei Führungsschienen vorgesehen, mit denen zwei Längsränder des Rollos lösbar verbunden werden können. Dies ermöglicht es, das Rollo an seinen Rändern in ähnlicher Weise fest aufzunehmen, wie dies im Stand der Technik bekannt ist, wobei das Rollo beim erfindungsgemäßen Rollosystem stationär an einer Vielzahl von Punkten mit der Führungsschiene verbunden wird, wenn der Wickelkörper relativ zur Führungsschiene bewegt wird. In einer besonders einfachen Ausführungsform könnte vorgesehen sein, daß die Führungsschiene und der zugehörige Längsrand des Rollos die beiden Teile eines Klettverschlusses aufweisen. Dies ermöglicht eine stationäre Befestigung des Rollos an den beiden Führungsschienen, wenn der Wickelkörper entlang den Führungsschienen bewegt wird.

Gemäß einer bevorzugten Ausführungsform der Erfindung ist vorgesehen, daß jeder Längsrand des Rollos mit einem Rastteil versehen ist, das mit einem Gegenstück verbunden werden kann, das an der Führungsschiene angebracht oder in diese integriert ist. Die Längsränder des Rollos werden also formschlüssig an den Führungsschienen angebracht, wenn der Wickelkörper sich entlang den Führungsschienen bewegt.

Die beiden Führungsschienen können parallel zueinander ausgeführt sein, wobei das Rollo vorzugsweise dann rechteckig ist. Es ist auch möglich, daß die beiden Führungsschienen einen variablen Abstand voneinander haben und das Rollo mit einer derart variablen Breite ausgeführt ist, daß die beiden Längsränder dem Verlauf der Führungsschienen folgen. Die Führungsschienen können dabei geradlinig, aber schräg zueinander verlaufen oder auch jeweils gekrümmt sein.

Die Erfindung wird nachfolgend anhand verschiedener Ausführungsformen beschrieben, die in den beigefügten Zeichnungen dargestellt sind. In diesen zeigen:
- Figur 1 eine Prinzipskizze eines Rollosystems gemäß einer ersten Ausführungsform;
- Figur 2 eine Prinzipskizze eines Rollosystems gemäß einer zweiten Ausführungsform der Erfindung;
- Figur 3 eine Prinzipskizze eines Rollosystems gemäß einer dritten Ausführungsform der Erfindung;
- Figur 4 in einer schematischen Draufsicht ein Rollosystem gemäß dem ersten Prinzip;
- Figur 5 in vergrößertem Maßstab den Schnitt V-V von Figur 4; und
- Figur 6 in einer schematischen Schnittansicht eine Ausführungsvariante eines Rollosystems gemäß dem ersten Prinzip.

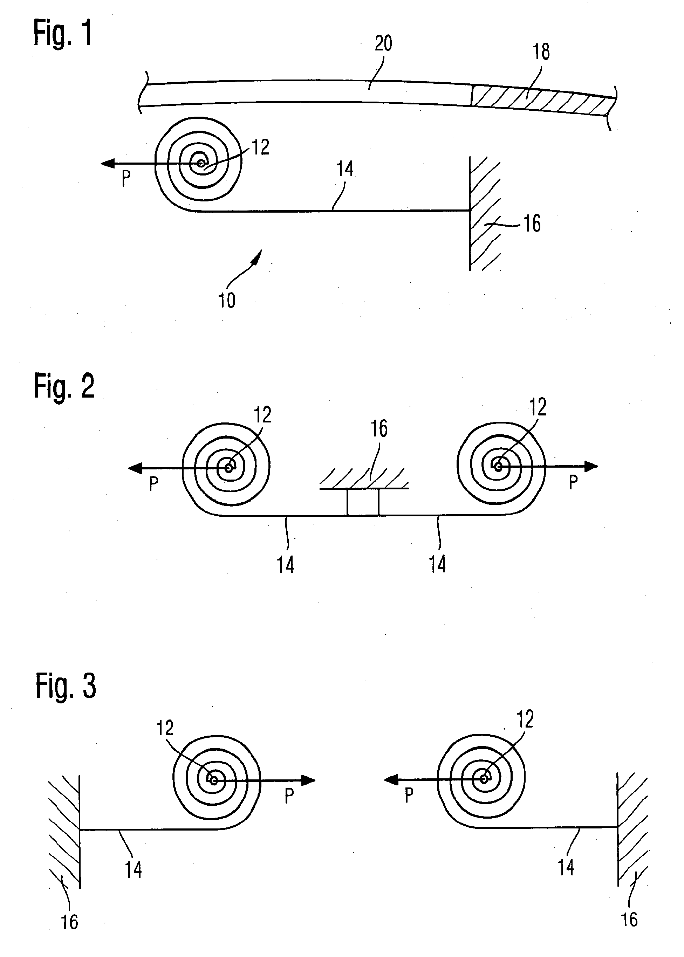

In Figur 1 ist schematisch ein Rollosystem 10 gezeigt, das einen Wickelkörper 12 und einen Rollo 14 aufweist. Das Rollo 14 ist mit einem Ende fest am Wickelkörper 12 angebracht, während das entegegengesetzte Ende ortsfest angebracht ist. Dies ist hier durch einen Fahrzeugabschnitt 16 symbolisiert. Das Rollosystem 10 ist unterhalb eines Dachs 18 eines Kraftfahrzeugs angebracht, daß mit einer Dachöffnung 20 versehen ist. Die Dachöffnung 20 kann von einem (nicht dargestellten) Deckel eines Schiebedachsystems verschlossen sein.

Der Wickelkörper 12 ist üblicherweise in einer (nicht gezeigten) Kassette aufgenommen und kann unterhalb der Dachöffnung 20 translatorisch verstellt werden. Wenn der Wickelkörper 12 in der Richtung des Pfeils P von Figur 1 nach links verstellt wird, erstreckt sich das Rollo 14 unterhalb der Dachöffnung 20, so daß ein Sonnenschutz gebildet ist.

In Figur 2 ist ein Rollosystem gezeigt, bei dem zwei Wickelkörper 14 vorgesehen sind. Auf jedem Wickelkörper 12 ist ein Rollo 14 aufgenommen, die beide miteinander verbunden sind. In diesem Bereich sind sie ortsfest am Fahrzeugsabschnitt 16 befestigt. Die beiden Wickelkörper 12 können in zueinander entgegengesetzten Richtungen verstellt werden, so daß beispielsweise eine vordere und eine hintere Dachöffnung eines Fahrzeugdachs abgedeckt werden können.

In Figur 3 ist ein Rollosystem gezeigt, daß ähnlich wie das von Figur 2 bekannte Rollosystem aus zwei Rollos 14 besteht, die auf zwei Wickelkörpern 12 aufgenommen sind. Im Unterschied zum Rollosystem von Figur 2 sind beim Rollosystem von Figur 3 die beiden Rollos nicht miteinander verbunden, sondern mit zwei einander gegenüberliegenden Fahrzeugabschnitten 16 verbunden. Die beiden gegenüberliegenden Wickelkörper 12 können zur Mitte hin zusammengeführt werden, so daß beispielsweise eine vordere und eine hintere Dachöffnung abgedeckt werden können.

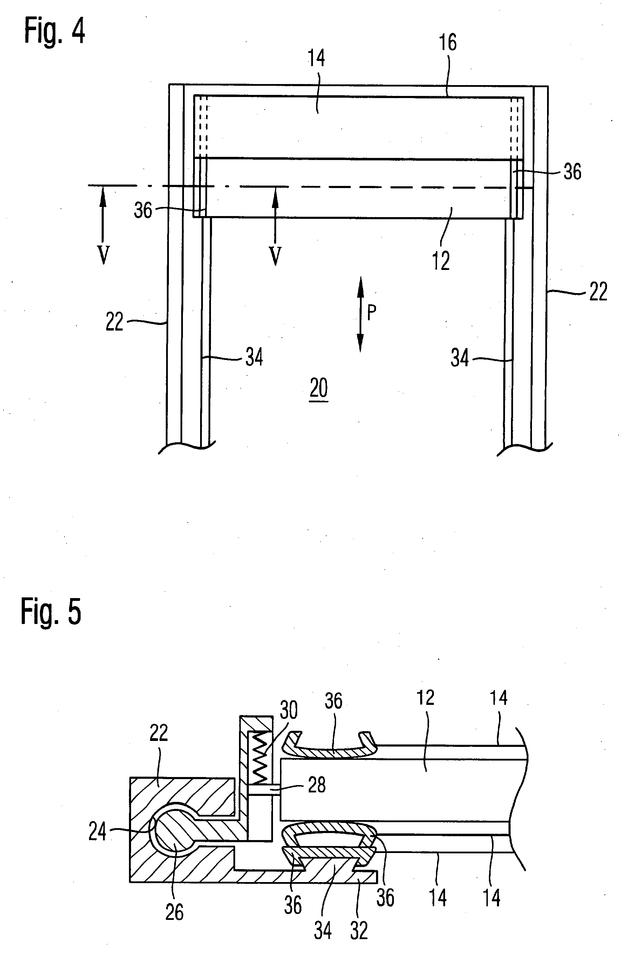

In den Figuren 4 und 5 ist ein Rollosystem gezeigt, das dem in Figur 1 dargestelltem Prinzip entspricht. Für die von Figur 1 bekannten Bauteile werden dieselben Bezugszeichen verwendet, und es wird insoweit auf die obigen Erläuterungen verwiesen.

Das Rollosystem weist zwei Führungsschienen 22 auf, die sich entlang den Längsrändern der Dachöffnung 20 erstrecken. An dem in Figur 4 oben liegenden Ende sind die beiden Führungsschienen 22 durch eine Quertraverse verbunden, die dem ortsfesten Fahrzeugabschnitt 16 entspricht. Dort ist ein Ende des Rollos 14 befestigt.

Die Führungsschienen 22 weisen jeweils eine Führungsnut 24 (s. Fig. 5) auf, in der ein Schlitten 26 geführt ist. Im Schlitten 26 ist eine Achse 28 des Wickelkörpers 12 aufgenommen, wobei eine Vorspannfeder 30 vorgesehen ist, welche den Wickelkörper 12 zu einem Basisabschnitt 32 der Führungsschiene 22 hin beaufschlagt. An dem Basisabschnitt 32 ist ein Raststeg 34 ausgebildet, der einen schwalbenschwanzförmigen Querschnitt hat.

Auf dem Wickelkörper 12 ist das Rollo 14 aufgenommen, wobei hier zwei Lagen gezeigt sind. Das Rollo 14 ist an jedem Längsrand mit einem Clip 36 (s. Fig. 5) versehen, der aus Kunststoff besteht und einen Innenquerschnitt aufweist, der zum schwalbenschwanzförmigen Querschnitt des Raststegs 34 komplementär ist. Das Rollo 14 kann beispielsweise in den Clip 36 eingegossen sein. Das Material des Clips 36 ist derart nachgiebig, daß das-Rollo zusammen mit den beiden Clips an den Längsrändern auf dem Wickelkörper 12 aufgenommen werden kann.

Wenn der Wickelkörper bezüglich Figur 4 nach unten entlang den Führungsschienen 22 verschoben wird, wird das Rollo 14 von ihm abgewickelt. Dabei drückt der Wickelkörper 12, unterstützt von der Vorspannfeder 30, den Clip 36 auf den Raststeg 34, so daß der Clip 36 dort nach und nach formschlüssig einrastet. Dadurch ist das Rollo 14 im Bereich zwischen dem Wickelkörper 12 und dem Fahrzeugabschnitt 16 seitlich zuverlässig geführt.

Anstelle des Clips 36, der auf dem Raststeg 34 einrastet, kann jeder beliebige geeignete Rastmechanismus verwendet werden, der aus einem Rastteil und einem Gegenstück besteht, die lösbar miteinander verbunden werden können, wenn der Wickelkörper entlang den beiden Führungsschienen 22 bewegt wird.

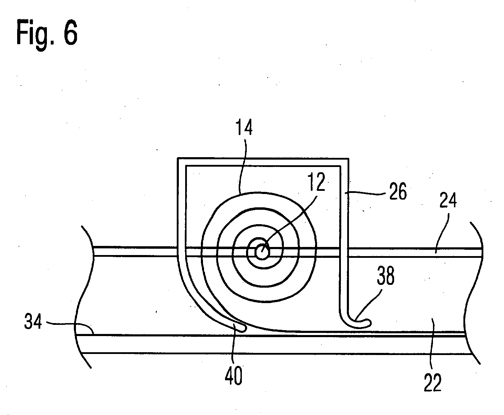

In Figur 6 ist eine Ausführungsvariante gezeigt, die sich von der in den Figuren 4 und 5 gezeigten Ausführungsform hinsichtlich der Art und Weise unterscheidet, wie das Rollo 14 mit der Führungsschiene verbunden bzw. von dieser wieder gelöst wird.

Der wesentlichste Unterschied besteht darin, daß der Wickelkörper 12 unverschiebbar am Schlitten 26 gelagert ist. Der Schlitten 26, die hier nach Art einer Kassette ausgeführt ist, in der das Rollo 14 aufgenommen ist, weist einen Druckgleiter 38 auf, der elastisch so vorgespannt ist, daß er mit einer gewissen Vorspannung auf dem Raststeg 34 aufliegt, wobei sich zwischen dem Druckgleiter 38 und dem Raststeg 34 das Rollo 14 bzw. der in diesem Bereich angebrachte Clip 36 befindet. Der Schlitten 26 weist auch einen Lösegleiter 40 auf, der zwischen dem Rollo 14 bzw. dem an diesem angebrachten Clip 36 und dem Raststeg 34 angeordnet ist. Das Rollo 14 läuft also zwischen dem Druckgleiter 38 und dem Lösegleiter 40 aus der Kassette heraus.

Wenn der Schlitten 22 so verschoben wird, daß das Rollo 14 aus der Kassette ausgezogen wird, drückt der Druckgleiter 38 den Clip 36 auf den Raststeg 34, so daß er dort einrastet. Wenn der Schlitten in der entgegengesetzten Richtung verschoben wird, so daß das Rollo 14 auf dem Wickelkörper 12 aufgenommen wird, schiebt sich der Lösegleiter 40 zwischen den Clip 36 und den Raststeg 34, so daß das Rollo von der Führungsschiene 22 gelöst wird und aufgewickelt werden kann.

## Patentansprüche

1. Rollosystem (10), insbesondere für ein Kraftfahrzeug, mit einem Wickelkörper (12) , der drehbar ist, und einem Rollo (14), das mit einem Ende am Wickelkörper angebracht ist, **dadurch gekennzeichnet, daß** ein zu dem Ende entgegengesetzter Bereich des Rollos ortsfest angebracht ist und der Wickelkörper (12) translatorisch verstellbar ist.

2. Rollosystem nach Anspruch 1, **dadurch gekennzeichnet, daß** zwei Führungsschienen (22) vorgesehen sind.

3. Rollosystem nach Anspruch 2, **dadurch gekennzeichnet, daß** der Wickelkörper (12) an den beiden Führungsschienen (22) gerührt ist.

4. Rollosystem nach einem der Ansprüche 2 und 3, **dadurch gekennzeichnet, daß** die beiden Führungsschienen parallel (22) zueinander angeordnet sind und das Rollo rechteckig ist.

5. Rollosystem nach einem der Ansprüche 2 und 3, **dadurch gekennzeichnet, daß** die beiden Führungsschienen (22) einen variablen Abstand voneinander haben und das Rollo (14) mit einer derart variablen Breite ausgeführt ist, daß die beiden Längsränder dem Verlauf der Führungsschienen folgen.

6. Rollosystem nach einem der Ansprüche 2 bis 5, **dadurch gekennzeichnet, daß** das Rollo (14) zwei Längsränder aufweist, die mit den Führungsschienen (22) lösbar verbunden werden können.

7. Rollosystem nach Anspruch 7, **dadurch gekennzeichnet, daß** jeder Längsrand des Rollos (14) mit einem Rastteil (36) versehen ist, das mit einem Gegenstück (34) verbunden werden kann, das an der Führungsschiene (22) angebracht ist.

8. Rollosystem nach einem der Ansprüche 6 und 7, **dadurch gekennzeichnet, daß** ein Vorspannmechanismus (30) vorgesehen ist, der den Wickelkörper (12) gegen das Gegenstück (34) beaufschlagt.

9. Rollosystem nach einem der Ansprüche 6 und 7, **dadurch gekennzeichnet, daß** ein Druckgleiter (38) und ein Lösegleiter (40) vorgesehen sind, die das Rollo (14) an der Führungsschiene (22) einrasten bzw. von dieser lösen.

10. Rollosystem nach einem der vorhergehenden Ansprüche, **dadurch gekennzeichnet, daß** zwei Rollos (14) mit zwei Wickelkörpem (12) vorgesehen sind, die in zueinander entgegengesetzten Richtung bewegbar sind.

11. Rollosystem nach einem der Ansprüche 1 bis 9, **dadurch gekennzeichnet, daß** zwei Rollos (14) mit zwei Wickelkörpern (12) vorgesehen sind, die in gleicher Richtung bewegbar sind.
